# EUROPÄISCHE PATENTSCHRIFT

(11) **EP 1 680 561 B1**
(45) Veröffentlichungstag und Bekanntmachung des Hinweises auf die Patenterteilung: **19.09.2012**
(21) Anmeldenummer: 04765794.5
(22) Anmeldetag: 04.10.2004
(51) Int. Cl.: E04B 1/76, B63B 25/16

(54) **DÄMMELEMENT AUS MINERALFASERN FÜR DEN SCHIFFSBAU**
INSULATING ELEMENT CONSISTING OF MINERAL FIBRES FOR THE CONSTRUCTION OF SHIPS
ELEMENT D'ISOLATION CONSTITUE DE FIBRES MINERALES POUR LA CONSTRUCTION NAVALE

(30) Priorität: 06.10.2003 EP 03022610; 07.01.2004 FR 0400084
(43) Veröffentlichungstag der Anmeldung: 19.07.2006
(73) Patentinhaber: SAINT-GOBAIN ISOVER, 92400 Courbevoie (FR)
(72) Erfinder: BRUER, Ina, 67105 Schifferstadt (DE); KELLER, Horst, 69259 Wilhelmsfeld (DE); BERNARD, Jean-Luc, F-60600 Giencourt Breuil Le Vert (FR); AMANNT, Gerald, 1010 Lausanne (CH)
(74) Vertreter: Bockhorni & Kollegen
(86) Internationale Anmeldenummer: PCT/EP2004/011061
(87) Internationale Veröffentlichungsnummer: WO 2005/035895

(56) Entgegenhaltungen:
- WO-A-89/12032
- WO-A-95/32925
- US-A- 5 346 868
- US-A- 5 614 449
- US-A1- 2002 168 521
- US-B1- 6 284 684
- US-B1- 6 358 872

## Beschreibung

Die Erfindung betrifft ein Dämmelement aus Mineralfasern für den Schiffbau insbesondere in Form einer Platte oder eines Rollfilzes gemäß den Merkmalen des Oberbegriffs des Patentanspruchs 1.

Ein Dämmelement aus Mineralfasern, welches sich für thermische und/oder akustische Isolierung eignet und welches gegenüber herkömmlichen Dämmelementen eine verbesserte chemische Zusammensetzung in Bezug auf die Biolöslichkeit aufweist ist bspw. in der US 6,284,684 B1 offenbart. Die Autoren zielen darauf ab, die Vorteile von Stein- und Glaswolle miteinander zu verbinden.

Die WO 95/32925 betrifft biologisch abbaubare Glasfaserzusammensetzungen mit mittlerem Faserdurchmesser von weniger als 3 Mikrons. Weitere Ansätze für eine verbesserte Biolöslichkeit von Mineralfasern sind in der US 6,358,872 B1 und der US 5,346,868 offenbart.

Im Schiffbau spielt der Brandschutz bei der Verkleidung von Wänden und Decken mit Dämmelementen hauptsächlich in öffentlich zugänglichen Wegen und Räumen eine wesentliche Rolle, wogegen dies beim Wärmeschutz nicht zutrifft. Da für den Wärmeschutz im Schiffbau in der Regel keine Vorschriften bestehen, kann der Reeder diejenigen Wärmeschutzmaßnahmen treffen, die er für sachgerecht hält. Aufgrund des geringen Rohgewichts wird hierbei für den Wärmeschutz vornehmlich Glaswolle als Wärmedämm-Material verwendet und zwar zum Beispiel mit Rohdichten knapp über 20 kg/m³ und einem λ-Rechenwert von 35 mW/mK entsprechend der Wärmeleitgruppe WLG 035 gemäß DIN 18165 im Hochbau.

Insbesondere für Passagierschiffe sind jedoch bezüglich des Brandschutzes weltweite Standards durch die International Maritime Organization (IMO) vorgeschrieben. Diese reichen von der Feuerwiderstandsklasse A15 für Kabinentrennwände bis zur Feuerwiderstandsklasse A60 für Fluchtwege, den Maschinenraum, die Küche und dergleichen, wobei die

Feuerwiderstandsklasse A30 für andere Zonen des Passagierschiffes vorgesehen sein kann. Wie auch in anderen Anwendungsgebieten wird die Feuerwiderstandsklasse einer Brandschutzkonstruktion dadurch ermittelt, dass ein abgeschlossener Raum im Brandversuch unter entsprechend hohe Temperatur gesetzt wird und die Zeitdauer bis zum Erreichen einer vorgeschriebenen Grenztemperatur in einem benachbarten, von der Brandschutzkonstruktion abgetrennten Raum, gemessen wird. Die Feuerwiderstandsklasse gibt diese Zeit als Mindestzeit in Minuten an. Es ist zweckmäßig, als maßgeblichen Parameter zur Bestimmung der geeigneten Dämmmaterialien im Schiffbau, wo die Dämmstoffdicken sehr unterschiedlich sind, sich auf das Flächengewicht zu beziehen, da dieser Parameter die beiden wesentlichen Einflußgrößen Rohdichte und Dicke verkörpert.

Für derartige Brandschutzkonstruktionen mit der Feuerwiderstandsklasse A30 oder höher findet bislang aufgrund seiner Temperaturbeständigkeit hauptsächlich Steinwolle als Dämmmaterial Verwendung. Derartige Steinwolle wird üblicherweise im Düsenblasverfahren oder mit externer Zentrifugierung, beispielsweise dem Kaskaden-Schleuderverfahren erzeugt. Dabei entstehen relativ grobe Fasern mit einem mittleren geometrischen Durchmesser größer 4 bis 12 µm von relativ geringer Länge. Aufgrund der Herstellung fällt weiterhin ein erheblicher Anteil an unzerfasertem Material in Form von gröberen Faserbestandteilen an, das in Form sogenannter "Perlen" im Produkt zu einem Anteil von 10 % bis 30 % vorliegt und am Gewicht, nicht aber an der Dämmwirkung und damit Brandschutzwirkung teilnimmt.

Gegenüber Filzen, Matten oder Platten aus Glaswolle liegt der Vorteil einer Brandschutzkonstruktion mit Steinwolle in dem besseren Brandschutzverhalten, weswegen diese auch bei den höheren Feuerwiderstandsldassen ausschließlich Anwendung findet. Dabei wird das Steinwollematerial entweder als gesteppte Drahtnetzmatte mit einem Bindemittelgehalt von ca. 0,7 Gew.-% (trocken bezogen auf die Fasermasse) mit einer Rohdichte von rund 90 kg/m³ oder aber als feste Platte mit einem Bindemittelgehalt von etwa 0,5 bis 2 Gew.-% und einer Rohdichte von 80 bis 150 kg/m³ verwendet. Im Falle von Platten führt der hohe Bindemittelgehalt bei hoher Rohdichte zu einem hohen absoluten Eintrag an Bindemittelmenge. Da als Bindemittel üblicherweise ein organisches Material wie Phenol-Formaldehydharz verwendet wird, ergibt sich damit eine nicht unerhebliche Erhöhung der Brandlast, welche im Brandversuch zu einem Flammaustritt auf der "kalten" Seite der Brandschutzkonstruktion führen kann, was ein Versagenskriterium ist. Gesteppte Drahtnetzmatten wiederum sind jedoch nicht überall einsetzbar.

Vor allem aber steht die Verwendung herkömmlicher Steinwolle nicht mit wesentlichen anderen Anforderungen im Schiffbau im Einklang:

Eine zentrale Anforderung im Schiffbau ist die Gewichtsminimierung, da jedes zusätzliche Gewicht zu einer Vergrößerung des Fahrwiderstands und damit des Treibstoffverbrauchs führt. Die hohe Rohdichte üblicher Steinwollprodukte von in jedem Falle über 80 kg/m³ führt insoweit zu einem unerwünschten Gewichtsanstieg aufgrund des hohen Volumens von Dämmmaterial für die Verkleidung von Wänden und Decken insbesondere von Passagierschiffen.

An zweiter Stelle der Anforderungen steht die Platzeinsparung. Innerhalb der Schiffshülle mit vorgegeben Außenabmessungen vermindert sich die nutzbare Fläche mit jeder Vergrö-βerung der Wanddicke. Herkömmliche Steinwolle hat aufgrund ihrer relativ kurzen, dicken Fasern jedoch einen vergleichsweise geringen Wärmedurchlasswiderstand zu herkömmlicher Glaswolle, so dass sich eine größere Wanddicke ergibt, um eine gleiche Wärmedämmwirkung zu erreichen. Diese Wärmedämmwirkung ist jedoch eine der Voraussetzungen für die Feuerwiderstandsfähigkeit.

Weiter herrschen auf einem Schiff in der Werft äußerst beengte Platzverhältnisse für die Handwerker. Aus diesem Grunde darf jedes Gewerk nur dasjenige Material an Bord bringen, welches in einer bestimmten Schicht auch verbaut wird und muss am Ende der Schicht nicht verbautes Material wieder von Bord schaffen. Auf diese Weise soll sichergestellt werden, dass etwa das Dämmmaterial des Dämmtechnikers die parallele Arbeit etwa von Elektrikern nicht über Gebühr behindert. Da auf jeden Fall vermieden werden muss, dass gegen Ende der Schicht das Material ausgeht, ist somit immer mit einem Überschuss zu arbeiten, der zunächst über enge Stege und Treppen zum Arbeitsplatz im Schiff transportiert werden muss und bei Schichtende wieder zurücktransportiert werden muss. Dabei sind hohes Gewicht und hohes Volumen der Materialien äußerst hinderlich. Hierbei wirkt sich insbesondere nachteilig aus, dass eine Komprimierung des Steinwollematerials kaum möglich ist, da es eine nur geringe Rückfederung aufweist. Würde das Steinwollematerial zur Platzersparnis stärker komprimiert, so bestünde die Gefahr, dass die erforderliche Einbaudicke bei nachfolgender Öffnung des Pakets nicht mehr erreicht würde.

Ein zusätzliches Problem besteht in der Vielfalt der verwendeten Brandschutz- und Wärmedämmmaterialien für die unterschiedlichen Feuerwiderstandsklassen bzw. einzubauenden Wärmedämmungen. Es muss also für jede Materialart die entsprechende logistische Vorkehrung getroffen werden, und es kann bei Mangel an einer Materialart in der Regel nicht mit einer anderen Dämmmaterialart weitergearbeitet werden. Daraus ergeben sich nicht unbeachtliche logistische Probleme, insbesondere wenn unter Zeitdruck und in engen Zeitrahmen gearbeitet werden muss.

Ein weiteres Problem auf Schiffen ist die Montage auf beengtem Raum über Kopf. Diese ist mit schweren Materialien besonders anstrengend und im Falle der Verwendung von gesteppten Drahtnetzmatten dadurch behindert, dass das Material keine Steifigkeit aufweist und von gehaltenen Stellen herabhängen kann. Zudem können aus dem Material beim Einbau herabfallende "Perlen" in Form von unzerfasertem Material die Arbeiten behindern. Zudem ist infolge der Oberfläche der Steinwolle mit relativ kurzen, spröden Fasern die Haptik unbefriedigend, da sich das Material beim Einbau nicht immer angenehm anfühlt.

Ein wesentliches Problem beim Schiffsbetrieb sind auch die Vibrationen. Diese treten auf, solange die Maschine läuft. Da die Vibrationen verschiedenster Frequenzen auch in das Steinwollematerial hinein übertragen werden, und dort die relativ dicken und schweren Fasern sowie die dazwischen angeordneten "Perlen" zum Schwingen bringen, besteht die Neigung, dass sich die durch das Bindemittel erzeugten Verbindungen zwischen den Fasern an den Kreuzungsstellen der Fasern lösen. Insbesondere bei senkrechten Brandschutzkonstruktionen kann dies zu einem Absetzen des Materials führen mit der Folge, dass die Brandschutzwirkung im Oberteil der Konstruktion unzulässig reduziert werden kann. Im Falle horizontaler Deckenkonstruktionen kann sich Faserbruch zusammen mit "Perlen" im unteren Bereich der Dämmung ansammeln, kann also gewissermaßen "ausgeschüttelt" werden, und dadurch nachfolgende Ausbauarbeiten wegen eines großen Verstaubungspotentials behindern, was zusätzliche Arbeitsschutzmaßnahmen erforderlich machen kann.

Ein Perlenanteil von 20-40 % entsteht bei der Herstellung von Mineralwolleprodukten mittels konventioneller Techniken wie dem spinnig cup process oder dem cascade rotor process, wie sie bspw. in der Druckschrift US 5,614,449 verwendet werden. Diese Druckschrift offenbart ein Dämmelement mit allen Merkmalen des Oberbegriffs des Anspruchs 1.

Aufgabe der Erfindung ist es, für den Schiffbau ein Dämmelement in der Form einer Platte oder eines Rollfilzes zu schaffen, welches die Nachteile derartiger Dämmelemente auf der Basis herkömmlicher Steinwolle behebt und gewichtsmäßig vergleichsweise leicht ausgebildet ist, wobei die Dämmelemente insbesondere um mindestens 25 % in ihrem Gewicht reduziert werden sollen, ohne dass die Anforderungen an die Brand- und Betriebssicherheit darunter leiden. Ferner sollen die Dämmelemente so beschaffen sein, dass dadurch die Kleinlogistik im Schiff verbessert wird.

Diese Aufgabe wird erfindungsgemäß durch die im kennzeichnenden Teil des Anspruches 1 enthaltenen Merkmale gelöst, wobei zweckmäßige Weiterbildungen der Erfmdung durch die in den Unteransprüchen enthaltenen Merkmale gekennzeichnet sind.

Die Erfindung zeichnet sich durch ein synergistisches Zusammenwirken mehrerer Faktoren aus. Zum einen werden Mineralfasern verwendet, deren Alkali/Erdalkali-Massenverhältnis < 1 ist. Dadurch zeichnet sich die Mineralfaser durch eine hohe Temperaturbeständigkeit aus, insbesondere im Vergleich zu solchen Fasern mit einem Alkali/Erdalkali-Massenverhältnis > 1. Zugleich wird das Mineralfasergebilde auf eine feine Faserstruktur ausgelegt, dergestalt, dass die Fasern einen mittleren geometrischen Durchmesser ≤ 4 µm aufweisen und das Flächengewicht des Dämmelements zwischen 0,8 und 4,3 kg/m² beträgt. Der Anteil des Bindemittels bezogen auf die Fasermasse des Dämmelements wird für diese fein ausgelegte Faserstruktur auf den Bereich von größer 0,5 bis 4 Gew.-% begrenzt. Durch diese Auslegung ergeben sich entsprechende Gewichtsvorteile im Vergleich zu Dämmelementen aus herkömmlicher Steinwolle. Im Verbund mit der fein ausgelegten Faserstruktur führt dies dazu, dass das einzelne Dämmelement höher komprimiert werden kann, da die erfindungsgemäße Mineralfaser ein höheres Rückstellungsvermögen aufweist. Dies bringt wiederum Platzvorteile mit sich und somit logistische Vorteile, da das zu transportierende Volumen innerhalb des Schiffes für die Handwerker kleiner ist. Das Mineralwollematerial ist ferner perlenfrei, das heißt der Anteil an Perlen beträgt < 1 %. Dies ist sehr vorteilhaft, weil daraus eine sehr homogene Ausbildung der feinen Faserstruktur und deswegen auch gleichmäßige Dämmwerte über die ganze Fläche des Dämmelements erzielt werden. Infolge der feineren Faserstruktur erreicht man bei erheblich verminderter Rohdichte zugleich den selben λ-Rechenwert wie herkömmliche Steinwolle bei erheblich höherer Rohdichte. Da zugleich bei gleichem prozentualem Bindemittelgehalt eine erheblich verminderte absolute Menge an Bindemittel in die Brandschutzkonstruktion eingetragen und somit die Brandlast erheblich vermindert wird, ergeben sich auch entsprechende Vorteile in Bezug auf die insbesondere für Passagierschiffe geforderten erheblichen Brandschutzkriterien nach IMO. Insgesamt gesehen kann hierdurch Dämmdicke und damit Wanddicke der Brandschutzkonstruktion für eine bestimmte Feuerschutzwiderstandsklasse eingespart werden. Dadurch erleichtert sich auch der Einbau der Dämmelemente zum einen aufgrund des verringerten Gewichts und zum anderen aufgrund der geringeren Dicke der Dämmelemente. Die handzuhabendenden Elemente sind leicht und überdies weisen sie - bei gleicher relativer Bindemittelmenge wie bei herkömmlichen Steinwollematerialien - eine höhere Steifigkeit gegen Durchbiegen unter dem Eigengewicht auf. Auch dies ist wiederum auf die gegenüber herkömmlicher Steinwolle feiner ausgelegte Faserstruktur zurückzuführen, die sozusagen ähnlich einer Glaswollstruktur ausgelegt ist, was dazu führt, dass bei gleicher Rohdichte wie bei herkömmlichen Steinwollefasern wesentlich mehr Fasern in der Struktur vorhanden sind und damit auch mehr Kreuzungspunkte für den Faserverbund. Bei gleichem Bindemitteleintrag wie bei Steinwolle reduziert sich aufgrund der größeren Anzahl von Kreuzungspunkten und der Konzentration des Bindemittels an diesen Punkten der nicht zu einer Bindung beitragende Anteil des Bindemittels, wodurch ein Faserverbund resultiert, der zu einer vergleichsweise steiferen Auslegung einer ausgehärteten Mineralfaserplatte führt. In anderen Worten: Das erfindungsgemäße Dämmelement zeichnet sich durch eine verbesserte Bindemittelausnutzung aus.

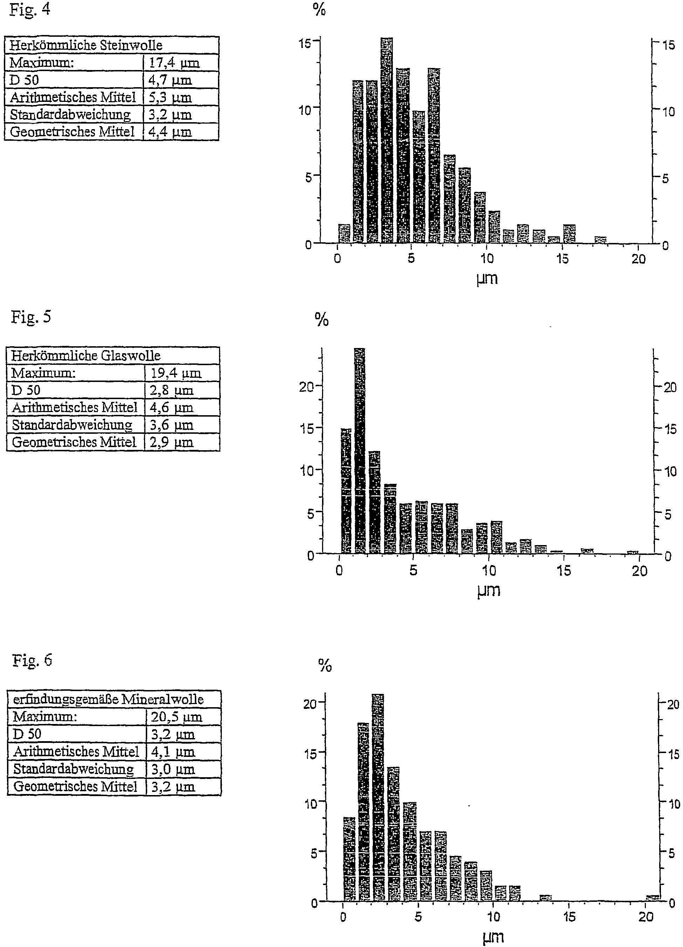

Der für die Faserfeinheit verantwortliche geringe mittlere geometrischen Durchmesser bestimmt sich aus der Häufigkeitsverteilung des Durchmessers der Fasern. Die Häufigkeitsverteilung lässt sich anhand einer Wolleprobe unter dem Mikroskop ermitteln. Es wird der Durchmesser einer großen Anzahl von Fasern ausgemessen und aufgetragen, wobei sich eine linksschiefe Verteilung ergibt (vgl. Fig. 4, 5 und 6).

Infolge der hohen Elastizität der schlanken, langen Fasern ergibt sich auch ein hervorragendes Rückfederungsverhalten bei Kompression. Deshalb können die Produkte hochkomprimiert an Bord gebracht und dort gehandhabt werden, und federn beim Öffnen der Packung für den Einbau auf ihre Nenndicke auf. Dies ist angesichts der beengten Platzverhältnisse auf einem Schiff von erheblicher Bedeutung.

Das erfindungsgemäß ausgelegte Mineralwollematerial erfüllt sowohl die Anforderungen an den Brandschutz als auch die Anforderungen an den Wärmeschutz. Dies hat zur Folge, dass dieses Material somit auch die bislang für bestimmte Anwendungen im Schiffbau eingesetzte Glaswolle geeignet ersetzen kann. Als Folge hiervon resultiert eine Reduzierung der Typenvielfalt, und insbesondere kann dadurch eine Verwechselungsgefahr mit Glaswolleprodukten ausgeschlossen werden..

Im Rahmen der Erfindung wird vorteilhaft als Bindemittel ein organisches Bindemittel verwendet, insbesondere Phenol-Formaldehydharz oder Melaminharz oder dgl.. Diese Bindemittel zeichnen sich durch eine gute Bindemittelwirkung aufgrund der erfindungsgemäß fein ausgelegten Faserstruktur aus, und tragen somit auch zur Versteifung des Dänunelements bei.

Hierbei ist es insbesondere zweckmäßig, wenn der Anteil des Bindemittels bezogen auf die Fasermasse des Dämmelements im Bereich von 0,5 bis 3 Gew.-%, insbesondere 0,5 bis 2 Gew.-% liegt. Insbesondere zweckmäßigerweise liegt der Bindemittelanteil für Dämmelemente der Feuerwiderstandsklasse A15 im Bereich von 2,5 bis 4 %, für A 30 im Bereich von 2 bis 3,5 % und für A60 im Bereich von 1 bis 3 %.

Mit Hinsicht auf eine praxisgerechte Verlegung der Dämmelemente am Schiffsdeck ist es zweckmäßig, das Flächengewicht bei einer Feuerwiderstandsklasse A15 oder dergl. von 0,8 bis 1,4 kg/m², vorzugsweise 1,2 kg/m², bei einer Feuerwiderstandsklasse A30 oder dergl. von 1,2 bis 1,8 kg/m², vorzugsweise 1,6 kg/m², und bei einer Feuerwiderstandsklasse A60 oder dergl. 2,0 bis 2,5 kg/m², vorzugsweise 2,3 kg/m³, auszulegen.

Mit Hinsicht auf eine praxisgerechte Verlegung der Dämmelemente am Schiffsschott ist es zweckmäßig, das Flächengewicht bei einer Feuerwiderstandsldasse A15 oder dergl. von 0,8 bis 1,4 kg/m², vorzugsweise 1,2 kg/m², bei einer Feuerwiderstandsklasse A30 oder dergl. von 1,2 bis 1,8 kg/m², vorzugsweise 1,6 kg/m², und bei einer Feuerwiderstandsklasse A60 oder dergl. 2,0 bis 2,5 kg/m², vorzugsweise 2,3 kg/m³, auszulegen. Soweit auf Normen und Prüfvorschriften Bezug genommen wird, gilt jeweils die zum Anmeldetag aktuelle Fassung.

Erfindungsgemäß ist es möglich, dass das Dämmelement für den Transport mit einem Verdichtungsverhältnis mindestens im Verhältnis 1:2 bis zu einer oberen Rohdichte von 50 kg/m³, und insbesondere bis zu einer oberen Rohdichte von 30 kg/m³ mindestens im Verhältnis 1:3 komprimiert werden kann, was für die Logistik bezüglich des Transports derartiger Dämmmaterialien während des Baus des Schiffes von großem Vorteil ist.

Das Dämmelement kann hierbei in Form einer Dämmstoffbahn vorliegen, welche unter Kompression zu einem Rollfilz gewickelt ist, oder aber in Form einer Platte, wobei infolge der feinen Faserstruktur und der hohen Bindemittelausnutzung die Platte vergleichsweise steif ist. Auch der Rollfilz bei einer Rohdichte im Bereich von 20 bis 30 kg/m³ besitzt im ausgerollten Zustand sozusagen Plattencharakter ähnlich einem sogenannten "Klemmfilz", so dass vom ausgerollten Rollfilz je nach Abmessungsbedürfnissen entsprechende Platten abgeschnitten werden können. Bei einer weiteren Ausführung des Rollfilzes in der Form einer gesteppten Drahtnetzmatte ist es vorteilhaft, dass diese eine Anwendungstemperatur > 500 °C bei Rohdichten zwischen 45 und 75 kg/m³, insbesondere zwischen 55 und 65 kg/m³ bei einem Bindemittelgehalt < 2 Gew.-%, insbesondere zwischen 0,5 und 1,5 Gew.-% aufweist.

Zweckmäßigerweise sind die Mineralfasern des Dämmelements durch innere Zentrifugierung im Schleuderkorb-Verfahren mit einer Temperatur am Schleuderkorb von mindestens 1.100 °C hergestellt. Die Herstellung von Mineralfasern mit einer vergleichsweise hohen Temperaturbeständigkeit im Wege der inneren Zentrifugierung ist bereits bekannt, wozu ausdrücklich auf die EP 0 551 476, die EP 0 583 792, WO 94/04468 sowie US 6,284,684 verwiesen und Bezug genommen wird. Im Rahmen der Erfindung sind im übrigen insbesondere Mineralfasern vorgesehen, deren Schmelzpunkt nach DIN 4102 Teil 17 oberhalb 1.000 °C liegt.

Die im Wege der inneren Zentrifugierung hergestellten Mineralfasern sind feiner und länger als herkömmliches Steinwollematerial, welches mit dem Düsenblasverfahren oder mit äußerer Zentrifugierung hergestellt ist. Daher sind die feineren, längeren Fasern elastischer als die relativ spröden Fasern herkömmlicher Steinwolle. Bei Schwingungen der Fasern durch Vibrationen werden erheblich geringere Kräfte von Kreuzungspunkt zu Kreuzungspunkt durch die dazwischen schwingende Faser übertragen, so dass die Verbindung der Fasern an ihren Kreuzungspunkten durch das Bindemittel auch bei Vibrationen stabil erhalten bleibt. Überdies ist derartiges durch innere Zentrifugierung hergestelltes Mineralwollematerial praktisch perlenfrei, so dass auch die Perlen nicht als zusätzliche Schwungmasse mit auf die Haftverbindung an den Kreuzungspunkten einwirken können. Überdies liegt die Eigenfrequenz der schlankeren, leichteren Fasern so hoch, dass sie allenfalls zu Oberschwingungen der Schiffsvibrationen in Resonanz treten könnten, die aber erheblich geringere Energieinhalte aufweisen.

Im Rahmen der Erfindung ist es zweckmäßig, dass das Dämmelement als Formteil für das übergreifende Dämmen von Spanten des Schiffes ausgebildet ist, was wiederum von Vorteil für die Montage ist. In diesem Zusammenhang ist es zweckmäßig, dass das Formteil eine Kaschierung aufweist, wie eine Aluminiumfolie oder ein Glasseidenvlies, und derart um die Spanten angebracht ist, dass es in einem Arbeitsgang wärmebrückenfrei diese umschließt.

Vorteilhaft sind die Dämmelemente bzw. Formteile aus in einem physiologischen Milieu löslichen Mineralfasern gebildet, wobei diese gemäß den Anforderungen der europäischen Richtlinie 97/69/EG und/oder den Anforderungen der deutschen Gefahrstoffverordnung Abs. IV Nr. 22 entsprechen, wodurch eine gesundheitliche Unbedenklichkeit der Feuerschutzeinlagen bei Herstellung, Verarbeitung, Nutzung und Entsorgung gewährleistet ist.

Nachfolgend ist in einer Tabelle 1 die bevorzugte Zusammensetzung der Mineralfasern eines erfindungsgemäßen Dämmelementes bzw. Formteiles bereichsweise in Gew.-% angegeben.

**Tabelle 1**

| | | | | | |
|---|---|---|---|---|---|
| SiO₂ | 39 - 55 | % | vorzugsweise | 39 - 52 | % |
| Al₂O₃ | 16 - 27 | % | vorzugsweise | 16 - 26 | % |
| CaO | 6 - 20 | % | vorzugsweise | 8 - 18 | % |
| MgO | 1 - 5 | % | vorzugsweise | 1 - 4,9 | % |
| Na₂O | 0 - 15 | % | vorzugsweise | 2 - 12 | % |
| K₂O | 0 - 15 | % | vorzugsweise | 2 - 12 | % |
| R₂O (Na₂O + K₂O) | 10 - 14,7 | % | vorzugsweise | 10 - 13,5 | % |
| P₂O₅ | 0 - 3 | % | insbesondere | 0 - 2 | % |
| Fe₂O₃ (Eisen gesamt) | 1,5 - 15 | % | insbesondere | 3,2 - 8 | % |
| B₂O₃ | 0 - 2 | % | vorzugsweise | 0 - 1 | % |
| TiO₂ | 0 - 2 | % | vorzugsweise | 0,4 - 1 | % |
| Sonstiges | 0 - 2,0 | % | | | |

Ein bevorzugter engerer Bereich von SiO₂ beträgt 39-44 %, insbesondere 40-43 %. Ein bevorzugter engerer Bereich für CaO beträgt 9,5 bis 20 %, insbesondere 10 bis 18 %.

Die erfindungsgemäße Zusammensetzung zeichnet sich insbesondere durch die Kombination aus, dass ein hoher Al₂O₃ Gehalt zwischen 16 und 27 %, vorzugsweise größer als 17 % und/oder vorzugsweise geringer als 25 % bei einer Summe der netzwerkbildenden Elemente SiO₂ und Al₂O₃ von zwischen 57 und 75 % beträgt, vorzugsweise größer als 60 % und/oder vorzugsweise geringer als 72 %, mit einem Anteil der Summe aus Na₂O und K₂O, der relativ hoch ist, jedoch in einem Bereich von 10-14,7 %, vorzugsweise 10-13,5 % liegt, bei einem Magnesiumoxidanteil in einem Anteil von wenigsten 1 %.

Diese Zusammensetzungen zeichnen sich durch ein beträchtlich verbessertes Verhalten bei sehr hohen Temperaturen aus.

In Bezug auf Al₂O₃ beträgt ein engerer bevorzugter Bereich 17 bis 25,5 %, insbesondere 20 bis 25 % und zwar vorzugsweise 21 bis 24,5 %, insbesondere etwa 22-23 oder 24 Gew.-%.

Gute feuerfeste Eigenschaften werden insbesondere bei Einstellung des Magnesiumoxidgehalts auf mindestens 1,5 %, insbesondere 2 % und zwar vorzugsweise 2 bis 5 % und dabei besonders bevorzugt ≥2,5 % oder 3 %. Ein hoher Magnesiumoxidanteil wirkt sich positiv gegen ein Absenken der Viskosität aus und wirkt sich deswegen günstig gegen ein Sinten des Materials aus.

Insbesondere ist bevorzugt, dass dann, wenn der Anteil von Al₂O₃ ≥22 % beträgt, der Anteil an Magnesiumoxid vorzugsweise wenigstens 1 %, insbesondere bevorzugt 1 bis 4 % beträgt, wobei ein weiterer bevorzugter Bereich von Magnesiumoxid 1 bis 2 % und zwar insbesondere 1,2 bis 1,6 % beträgt. Der Anteil an Aluminiumoxid ist vorzugsweise auf 25 % begrenzt, um eine ausreichend geringe Liquidustemperatur zu erhalten. Liegt der Aluminiumoxidanteil in einem Bereich von etwa 17 bis 22 %, beträgt der Anteil an Magnesiumoxid vorzugsweise wenigstens 2 %, insbesondere etwa 2 bis 5 %.

Nachfolgend werden Ausführungsformen der Erfindung anhand der Zeichnung beschrieben. Darin zeigen
- Fig. 1: schematisch vereinfacht eine Brandschutzkonstruktion an einem Schiffsdeck unter Verwendung von Rollfilz,
- Fig. 2: in einer in Fig. 1 entsprechenden Darstellung eine andere Ausführungsform der Brandschutzkonstruktion unter Verwendung von Formteilen,
- Fig. 3: ein Diagramm eines Vergleichsversuchs im Rahmen einer Wärmeleitfähigkeitsprüfung bei 400°C,
- Fig. 4: ein typisches Faserhistogramm einer herkömmlichen Steinwolle,
- Fig. 5: ein typisches Faserhistogramm einer herkömmlichen Glaswolle, und
- Fig. 6: ein typisches Faserhistogramm der erfindungsgemäßen Mineralwolle.

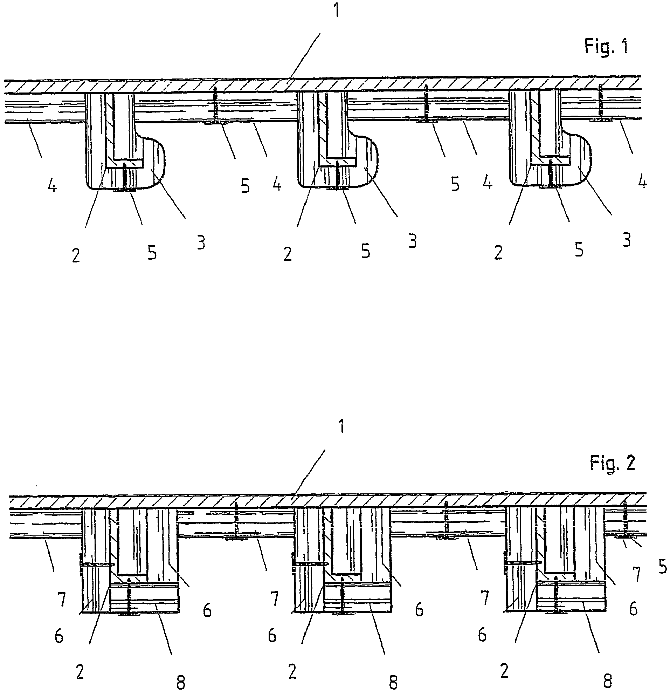

In den Figuren 1 und 2 ist mit 1 ein Schiffsdeck bezeichnet, das an seiner Unterseite mit Spanten 2 ausgesteift ist. Die Spanten 2 haben in der üblichen Weise ein L-Profil und sind mit nicht näher dargestellten Schweißnähten mit ihrem langen Schenkel an der Unterseite des Schiffsdecks 1 befestigt, so dass sich das bestmögliche Widerstandsmoment des Profils zur Aussteifung des Schiffsdecks 1 nutzen lässt.

Eine Brandschutzkonstruktion eines solchen Schiffsbereichs besteht nun im Prinzip darin, die Unterseite des Schiffsdecks 1 gegen einen Brand unterhalb des Schiffsdecks 1 derart abzuschirmen, dass die hohe Temperatur des Brandes im Raum oberhalb des Schiffsdecks 1 erst nach einer vorgegebene Zeitspanne zu einer vorgegebenen Grenztemperatur führt. Es versteht sich, dass die Brandschutzkonstruktion über die zu fordernde Zeit hinweg auch körperlich bestehen bleiben muss, da sonst ein ungehinderter Wärmedurchtritt und damit Temperaturanstieg die Folge wäre.

Im Beispielsfall der Fig. 1 sind die Spanten 2 mit durch innere Zentrifugierung im Schleuderkorb-Verfahren hergestellten Mineralwollefilz 3 abgedeckt. Für eine Feuerwiderstandsklasse A15 genügt hierfür ein sehr leichtes Rollfilzmaterial 3 mit einem Flächengewicht von im Beispielsfall 1,2 kg/m², welches als Rolle mit einem Kompressionsverhältnis von 1: 3,5 angeliefert worden ist. Der Bereich zwischen den Spanten 2 ist mit ebenfalls durch innere Zentrifugierung hergestellten Mineralwollematerial in Form von Platten 4 abgedeckt. Diese besitzen im Beispielsfall ebenfalls ein Flächengewicht von 1,2 kg/m² auf. Sowohl die Filze 3 als auch die Platten 4 sind mit geeigneten Metallklipsen befestigt, wie dies bei 5 in den Figuren 1 und 2 veranschaulicht ist.

Bei der Ausführungsform gemäß Fig. 2 ist dieselbe Deckenkonstruktion mit plattenförmigen Mineralwollematerial abgedeckt, welches ebenfalls durch innere Zentrifugierung hergestellt ist. Dabei sind die Spanten 2 in der dargestellten Weise jedoch durch entsprechend zugeschnittene Plattenabschnitte 6 und 8 gedämmt, d.h. kastenartig umschlossen. Dazwischen sind Zwischenplatten 7 eingesetzt, wobei sämtliche Elemente mit geeigneten Metallklipsen 5 an der Deckenkonstruktion gehalten sind. Die Plattenabschnitte 6 bis 8 können vorzugsweise auch als integrales Formteil ausgebildet sein, das derart jeweils um die Spanten angebracht wird, das es in einem Arbeitsgang wärmebrückenfrei die Spanten umschließt.

Das Plattenmaterial für die Plattenabschnitte 6, 7 und 8 weist im Beispielsfalle ein Flächengewicht 2,3 kg/m² auf. Mit einer solchen Brandschutzkonstruktion kann problemlos die Feuerwiderstandsklasse A60 erreicht werden.

Die Standfestigkeit des Materials im Brandfalle ist dadurch gewährleistet, dass die Mineralwollefasern derart ausgewählt sind, dass ihr Schmelzpunkt über 1.000 °C liegt. Damit ist sichergestellt, dass auch bei der Feuerwiderstandsklasse A60 das erfindungsgemäße Dämmelement lange genug, in diesem Falle also eine Stunde, gegenüber den Temperaturen des Brandes stabil bleibt.

In den dargestellten Ausführungsformen beträgt der mittlere geometrische Faserdurchmesser 3,2 µm und der Bindemittelgehalt jeweils 1,8 Gew.-%.

Die Zusammensetzung in Gew.-% der konventionellen, also aus herkömmlicher Steinwolle gebildeten Dämmelemente bzw. Formteile, sowie aus herkömmlicher Glaswolle gebildeten Dämmelemente bzw. Formteile und der erfmdungsgemäßen Dämmelemente bzw. Formteile ergibt sich aus Tabelle 2, wobei die herkömmliche Steinwolle sowie das erfindungsgemäße Dämmelement bzw. Formteil einen Schmelzpunkt von mindestens 1000°C nach DIN 4102 Teil 17 aufweisen.

**Tabelle 2**

| Material | herkömmliche Steinwolle | herkömmliche Glaswolle | erfindungsgemäße Dämmelemente |
|---|---|---|---|
| SiO₂ | 57,2 | 65 | 41,2 |
| Al₂O₃ | 1,7 | 1,7 | 23,7 |
| Fe₂O₃ | 4,1 | 0,4 | 5,6 |
| TiO₂ | 0,3 | | 0,7 |
| CaO | 22,8 | 7,8 | 14,4 |
| MgO | 8,5 | 2,6 | 1,5 |
| Na₂O | 4,6 | 16,4 | 5,4 |
| K₂O | 0,8 | 0,6 | 5,2 |
| B₂O₃ | | 5 | |
| P₂O₅ | | 0,15 | 0,75 |
| MnO | | 0,3 | 0,6 |
| SrO | | | 0,5 |
| BaO | | | 0,34 |
| Total | 100 | 99,95 | 99,89 |

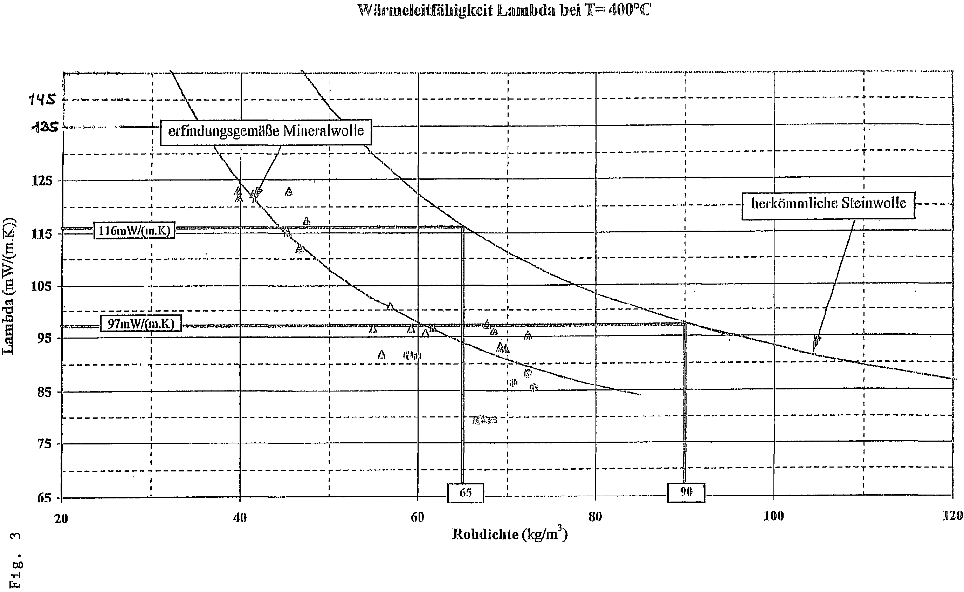

In Fig. 3 ist die Meßreihe eines Wärrneleitfälligkeitsversuches bei 400°C über der Rohdichte in Form eines Diagramms dargestellt. Die Meßergebnisse wurden nach DIN 52612-1 mit einem sogenannten Zweiplattengerät ermittelt.

Aus diesem Diagramm ist in einfacher Weise ersichtlich, welches Einsparpotential bei Verwendung der erfindungsgemäßen Mineralwolle gegenüber herkömmlicher Steinwolle möglich ist, und zwar beispielhaft für zwei Rohdichten 65 und 90 kg/m³. Die gleiche Wärmeleitfähigkeit von 116 mW/mK, welche bei herkömmlicher Steinwolle mit einer Rohdichte von 65 kg/m³ erreicht wird, wird mit der erfindungsgemäßen Mineralwolle bereits bei einer Rohdichte von etwa 45 kg/m³ erhalten, d.h. mit einer Gewichtseinsparung von ca. 31 %. Analog ergibt sich bei einer Rohdichte von 90 kg/m³ der herkömmlichen Steinwolle durch die erfmdungsgemäße Mineralwolle eine Gewichtseinsparung von ca. 33 %.

Schließlich zeigen die Fig. 4 und 5 für die in der Beschreibung erwähnte herkömmliche Steinwolle und herkömmliche Glaswolle jeweils ein typisches Faserhistogramm der Dämmelemente, wobei Fig. 6 ein solches der Fasern der erfindungsgemäßen Dämmelemente bzw. Formteile angibt.

Die folgende Tabelle zeigt Vergleichsversuche zwischen einerseits Dämmelementen aus herkömmlicher Steinwolle und erfindungsgemäßen und mit IM bezeichneten Elementen und zwar bezogen auf die verschiedenen Feuerwiderstandsklassen A15, A30 und A60 sowie differenziert in Bezug auf Schott und Deck. Die Ergebnisse der Tabelle zeigen, dass trotz wesentlich verminderter Flächengewichte und erheblich verminderter Rohdichte, was gerade für die Anwendung der Dämmelemente im Schiffsbau wesentlich ist, die Prüfung der Feuerwiderstandsklassen A15, A30 und A60 durch die IM-Dämmelemente bestanden wurden.

**Tabelle 3**

| Typ | Material | Rohdichte [kg/m³] | Dicke [mm] | Flächengewicht [kg/m²] | Prüfung Feuerwiderstandsklasse | Glühverlust [%] |
|---|---|---|---|---|---|---|
| A15 | Steinwolle | 45 | 50 | 2,25 | bestanden | 1,8 |
| Schott | IM | 22 | 60 | 1,32 | bestanden | 3 |
| A15 | Steinwolle | 45 | 50 | 2,25 | bestanden | 1,8 |
| Deck | IM | 22 | 60 | 1,32 | bestanden | 3 |
| A30 | Steinwolle | 45 | 50 | 2,25 | bestanden | 1,8 |
| Schott | IM | 36 | 50 | 1,8 | bestanden | 3 |
| A30 | Steinwolle | 45 | 50 | 2,25 | bestanden | 1,8 |
| Deck | IM | 36 | 50 | 1,8 | bestanden | 3 |
| A60 | Steinwolle | 100 | 60 | 6 | bestanden | 1,5 |
| Schott | IM | 70 | 60 | 4,2 | bestanden | 2,5 |
| A60 | Steinwolle | 100 | 40 | 4 | bestanden | 1,5 |
| Deck | IM | 48 | 50 | 2,4 | bestanden | 2,5 |

## Patentansprüche

1. Dämmelement in der Form einer Platte (4,6,7,8) oder eines Rollfilzes (5) für den Schiffbau aus gebundenen, in einem physiologischen Milieu löslichen Mineralfasern, insbesondere als Brand- und/oder Wärme- und/oder Schallschutz eingesetztes Dämmelement, wobei die Zusammensetzung der Mineralfasern des Dämmelements ein Alkali/ Erdalkali Massenverhältnis von < 1 aufweist und die Faserstruktur des Dämmelements bestimmt ist durch einen mittleren geometrischen Faserdurchmesser ≤ 4 µm, ein Flächengewicht von 0,8 bis 4,3kg/m² und einen Anteil des Bindemittels bezogen auf die Fasermasse des Dämmelements im Bereich von größer 0,5 bis 4 Gew.-%; **dadurch gekennzeichnet, dass** die Faserstruktur des Dämmelements perlenfrei ist, dass heißt der Anteil der Perlen in der Faserstruktur < 1 % beträgt.

2. Dämmelement nach Anspruch 1, **dadurch gekennzeichnet, dass** das Bindemittel ein organisches Bindemittel ist.

3. Dämmelement nach Anspruch 1 oder 2, **dadurch gekennzeichnet, dass** der Anteil des Bindemittels bezogen auf die Fasermasse des Dämmelements im Bereich von 0,5 bis 3 Gew.-%, insbesondere 0,5 bis 2 Gew.-% liegt.

4. Dämmelement nach Anspruch 1, insbesondere für die Dämmung des Schiffsdecks, **dadurch gekennzeichnet, dass** das Flächengewicht bei einer Feuerwiderstandsklasse A15 oder dergl. von 0,8 bis 1,4 kg/m², vorzugsweise 1,2 kg/m², bei einer Feuerwiderstandsklasse A30 oder dergl. von 1,2 bis 1,8 kg/m², vorzugsweise 1,6 kg/m², und bei einer Feuerwiderstandsklasse A60 oder dergl. 2,0 bis 2,5 kg/m², vorzugsweise 2,3 kg/m³, beträgt.

5. Dämmelement nach Anspruch 1, insbesondere für die Dämmung des Schiffsschott, **dadurch gekennzeichnet, dass** das Flächengewicht bei einer Feuerwiderstandsklasse A15 oder dergl. von 0,8 bis 1,4 kg/m², vorzugsweise 1,2 kg/m², bei einer Feuerwiderstandsklasse A30 oder dergl. von 2,3 bis 3,0 kg/m², vorzugsweise 2,7 kg/m², und bei einer Feuerwiderstandsklasse A60 oder dergl. von 3,2 bis 4,3 kg/m³, vorzugsweise 4,0 kg/m³, beträgt.

6. Dämmelement nach einem der vorhergehenden Ansprüche, **dadurch gekennzeichnet, dass** es einen λ-Rechenwert von ≤ 35 mW/mK aufweist.

7. Dämmelement nach einem der vorhergehenden Ansprüche, **dadurch gekennzeichnet, dass** die Dämmelemente zum Zwecke ihrer Verpackung bis zu einer oberen Rohdichte von 50 kg/m³ mindestens im Verhältnis 1:2, insbesondere bis zu einer oberen Rohdichte von 30 kg/m³ mindestens im Verhältnis 1:3 komprimierbar sind.

8. Dämmelement in der Form eines Rollfilzes gemäß dem Oberbegriff des Anspruchs 1, **dadurch gekennzeichnet, dass** die Zusammensetzung der Mineralfaser des Dämmelements ein Alkali/Erdalkali-Massenverhältnis von < 1 aufweist, und dass die Faserstruktur des Dämmelements bestimmt ist durch einen mittleren geometrischen Faserdurchmesser ≤ 4 µm, und dass der Rollfilz in der Form einer gesteppten Drahtmatte ausgebildet ist, dessen Anwendungstemperatur > 500 °C beträgt bei Rohdichten zwischen 45 und 75 kg/m³, insbesondere zwischen 55 und 65 kg/m³ und einem Bindemittelgehalt < 2 Gew.-%, insbesondere zwischen 0,5 und 1,5 Gew.-%.

9. Dämmelement nach einem der vorhergehenden Ansprüche, **dadurch gekennzeichnet, dass** die Mineralfasern des Dämmelements durch eine innere Zentrifugierung im Schleuderkorbverfahren mit einer Temperatur am Schleuderkorb von mindestens 1.100 °C hergestellt sind.

10. Dämmelement nach einem der vorhergehenden Ansprüche, **dadurch gekennzeichnet, dass** es als Formteil für das übergreifende Dämmen von Spanten des Schiffes ausgebildet ist.

11. Formteil nach Anspruch 10, **dadurch gekennzeichnet, dass** das Formteil eine Kaschierung aufweist, wie eine Aluminiumfolie oder ein Glasseidenvlies, und derart um die Spanten angebracht ist, dass es in einem Arbeitsgang wärmebrückenfrei diese umschließt.

12. Dämmelement bzw. Formteil nach einem der vorhergehenden Ansprüche, **dadurch gekennzeichnet, dass** die Mineralfasern des Dämmelements bzw. Formteils hinsichtlich ihrer Löslichkeit in einem physiologischen Milieu gemäß den Anforderungen der europäischen Richtlinie 97/69/EG und/oder den Anforderungen der deutschen Gefahrstoffverordnung Abs. IV Nr. 22 entsprechen.

13. Dämmelement bzw. Formteil nach Anspruch 12, **gekennzeichnet durch** folgende Bereiche der chemischen Zusammensetzung der Mineralfasern in Gew.-%:
| | | | |
|---|---|---|---|
| SiO₂ | 39 - 55 % | vorzugsweise | 39 - 52 % |
| Al₂O₃ | 16 - 27 % | vorzugsweise | 16 - 26 % |
| CaO | 6 - 20 % | vorzugsweise | 8 - 18 % |
| MgO | 1 - 5 % | vorzugsweise | 1 - 4,9 % |
| Na₂O | 0 - 15 % | vorzugsweise | 2 - 12 % |
| K₂O | 0 - 15 % | vorzugsweise | 2 - 12 % |
| R₂O (Na₂O + K₂O) | 10 - 14,7 % | vorzugsweise | 10 - 13,5 % |
| P₂O₅ | 0 - 3 % | insbesondere | 0 - 2 % |
| Fe₂O₃ (Eisen gesamt) | 1,5 - 15 % | insbesondere | 3,2 - 8 % |
| B₂O₃ | 0 - 2 % | vorzugsweise | 0 - 1 % |
| TiO₂ | 0 - 2 % | vorzugsweise | 0,4 - 1 % |
| Sonstiges | 0 - 2,0 % | | |

## Claims

1. Insulating element in the form of a plate (4, 6, 7, 8) or roll felt (5) for shipbuilding, from bound, in a physiological agent soluble mineral fibers, especially insulating element, utilized as fire and/or thermal-and/or sound protection, whereby the composition of the mineral fibers of the insulating element amounts to an alkali/alkaline-earth mass ratio of < 1 and the fiber structure of the insulating element is determined by an average geometrical fiber diameter of ≤ 4 µm, a weight per unit area of 0,8 through 4,3 kg/m² and a portion of bonding agent, which referred to the fiber mass of the insulating elements is in the range above 0,5 through 4 weight % **characterized in that**
the fibre structure of the insulating element is determined exempt of beads, which means that the amount of beads in the fibre structure is < 1 %.

2. Insulating element according to claim 1, **characterized in that** the bonding agent is an organic bonding agent.

3. Insulating element according to claim 1 or 2, **characterized in that** the portion of the bonding agent, related to the fiber mass of the insulating element, lies within the range of 0,5 to 3 weight %, in particular 0.5 to 2 weight %.

4. Insulating element according to claim 1, particularly for the insulation of the ship deck, **characterized in that** the weight per unit area with a Fire Resistance Category A15 or similar amounts to 0,8 to 1.4 kg/m², preferably 1.2 kg/m², with a Fire Resistance Category A30 or similar, from 1,2 to 1.8 kg/m², preferably 1.6 kg/m², and with a Fire Resistance Category A60 or similar, 2,0 to 2.5 kg/m², preferably 2.3 kg/m³.

5. Insulating element according to claim 1, particularly for the insulation of the ship bulkhead, **characterized in that** the weight per unit area with a Fire Resistance Category A15 or similar amounts from 0,8 to 1.4 kg/m², preferably 1.2 kg/m², with a Fire Resistance Category A30 or similar, from 2,3 to 3.0 kg/m², preferably 2.7 kg/m², and with a Fire Resistance Category A60 or similar, from 3,2 to 4.3 kg/m³, preferably 4.0 kg/m³.

6. Insulating element according to one of the preceding claims, by the fact **characterized in that** it features an λ-arithmetic value of ≤ 35 mW/mK.

7. Insulating element according to one of the preceding claims, thereby **characterized in that** the insulating elements are compressible, for the purpose of their packing, at least in the ratio of 1:2, in case of an upper gross density to 50 kg/m³ and in particular in the ratio of 1:3 in case of an upper gross density till 30 kg/m³.

8. Insulating element in the form of roll felt in accordance with preamble of claim 1, **characterized in that** the composition of the mineral fiber of the insulating element amounts to an alkali/alkaline-earth mass ratio of <1 and the fiber structure of the insulating element is determined by an average geometrical fiber diameter of ≤ 4 µm and the roll felt features the form of a stepped wire mat, whose utilization temperature is > 500 °C with gross densities between 45 and 75 kg/m³, especially between 55 an 65 kg/m³, and a bonding agent content < 2 weight %, especially between 0,5 and 1,5 weight %.

9. Insulating element according to one of the preceding claims, **characterized in that** the mineral fibers of the insulating element are manufactured by an internal centrifugation in the centrifuge basket procedure, with a temperature at the centrifugation basket of at least 1,100°C.

10. Insulating element according to one of the preceding claims, **characterized in that** it is designed as a molded section for surpassing insulation of vessel's frames.

11. Molded section according to claim 10, **characterized in that** the molded section features a lamination, like an aluminum foil or a glass cloth fleece, being applied in such a manner around the frames that it encloses these units in one processing step exempt of a thermal bridge.

12. Insulating element respectively, molded element according to one of the preceding claims, **characterized in that** the mineral fibers of the insulating element respectively molded element, correspond, regarding their solubility in a physiological environment, to the requirements of the European guideline 97/69/EG and/or the requirements of the German dangerous material regulation exp. IV NR. 22.

13. Insulating element respectively molded element according to claim 12, **characterized by** the following ranges of the chemical composition of the mineral fibers in weight-%:
| | | | |
|---|---|---|---|
| SiO₂ | 39 - 55 % | preferably | 39 - 52 % |
| Al₂O₃ | 16 - 27 % | preferably | 16 - 26 % |
| CaO | 6 - 20 % | preferably | 8 - 18 % |
| MgO | 1 - 5 % | preferably | 1 - 4,9 % |
| Na₂O | 0 - 15 % | preferably | 2 - 12 % |
| K₂O | 0 - 15 % | preferably | 2 - 12 % |
| R₂ (Na₂O+K₂O) | 10 - 14,7 % | preferably | 10 - 13,5 % |
| P₂O₅ | 0 - 3 % | especially | 0 - 2 % |
| Fe₂O₃ (iron total) | 1,5 - 15 % | especially | 3,2 - 8 % |
| B₂O₃ | 0 - 2 % | preferably | 0 - 1 % |
| TiO₂ | 0 - 2 % | preferably | 0,4 - 1 % |
| Other | 0 - 2,0 % | | |

## Revendications

1. Élément isolant sous la forme d'un panneau (4, 6, 7, 8) ou d'un rouleau de feutre (5) pour la construction de bateaux en fibres minérales liées et solubles en milieu physiologique, principalement utilisé comme isolant thermique, insonorisant ou pare-feu, dans lequel la composition des fibres minérales de l'élément isolant présente une relation de masse alcalin/alcalino-terreux de < 1 % et la structure fibreuse de l'élément isolant est déterminée à l'aide d'un diamètre géométrique moyen de ≤ 4 µm, un poids superficiel de 0,8 à 4,3 kg/m² et une fraction du liant basée sur la masse fibreuse de l'élément isolant dans une étendue de 0,5 à 4 % de poids, c'est-à-dire que la structure fibreuse de l'élément isolant est sans bulles.

2. Élément isolant selon la revendication 1, **caractérisé en ce que** le liant utilisé est un liant organique.

3. Élément isolant selon la revendication 1 ou 2, **caractérisé en ce que** la fraction du liant basée sur la masse fibreuse de l'élément isolant se situe dans une étendue de 0,5 à 3 % de poids, et plus particulièrement entre 0,5 et 2 % de poids.

4. Élément isolant selon la revendication 1, en particulier pour l'isolation de ponds de bateaux, **caractérisé en ce que** le poids superficiel se situe, pour un indice de résistance au feu de A15 ou similaire, entre 0,8 et 1,4 kg/m², préférablement 1,2 kg/m², pour un indice de résistance au feu de A30 ou similaire, entre 1,2 et 1,8 kg/m², préférablement 1,6 kg/m², pour un indice de résistance au feu de A60 ou similaire, entre 2,0 et 2,5 kg/m², préférablement 2,3 kg/m³.

5. Élément isolant selon la revendication 1, en particulier pour l'isolation de cloisons de bateau, **caractérisé en ce que** le poids superficiel se situe, pour un indice de résistance au feu de A15 ou similaire, entre 0,8 et 1,4 kg/m², préférablement 1,2 kg/m², pour un indice de résistance au feu de A30 ou similaire, entre 2,3 et 3,0 kg/m², préférablement 2,7 kg/m², pour un indice de résistance au feu de A60 ou similaire, entre 3,2 et 4,3 kg/m³, préférablement 4,0 kg/m³.

6. Élément isolant selon l'une des revendications précédentes, **caractérisé en ce qu'**il présente une valeur de calcul λ de ≤ 35 mW/mK.

7. Élément isolant selon l'une des revendications précédentes, **caractérisé en ce que** les éléments isolants peuvent être comprimés en vue de leur empaquetage jusqu'à une densité brute supérieure de 50 kg/m³, dans un rapport d'au moins 1:2, et particulièrement jusqu'à une densité brute supérieure de 30 kg/m³, dans un rapport d'au moins 1:3.

8. Élément isolant sous la forme d'un rouleau de feutre selon le terme générique de la revendication 1, **caractérisé en ce que** la composition des fibres minérales de l'élément isolant présente une relation de masse alcalin/alcalino-terreux de < 1 et la structure fibreuse de l'élément isolant est déterminée à l'aide d'un diamètre géométrique moyen de ≤ 4 µm, et que le rouleau de feutre est formé selon la forme d'un tapis de fil métallique dont la température d'utilisation s'élève à > 500 °C pour une densité brute entre 45 et 75 kg/m³, en particulier entre 55 et 65 kg/m³ et pour un contenu en liant de < 2 % du poids, plus particulièrement entre 0,5 et 1,5 % de poids

9. Élément isolant selon l'une des revendications précédentes, **caractérisé en ce que** les fibres minérales de l'élément isolant sont fabriquées à l'aide d'une centrifugation interne dans un procédé de cage centrifuge à une température d'au moins 1100 °C dans la cage centrifuge.

10. Élément isolant selon l'une des revendications précédentes, **caractérisé en ce qu'**il est formé en tant que pièce moulée pour l'isolation complète des couples d'un navire.

11. Pièce moulée selon la revendication 10, **caractérisée en ce que** la pièce moulée est laminé à l'aide d'une feuille d'aluminium ou un rembourrage en fibre de verre, et est enroulée de cette façon autour des couples de façon à y couper tous les ponts thermiques durant les procédés de travail.

12. Élément isolant ou plus particulièrement pièce moulée selon l'une des revendications précédentes, **caractérisé en ce que** les fibres minérales de l'élément isolant, ou plus particulièrement de la pièce moulée, respectent, du point de vue de leur solubilité dans un milieu physiologique, les exigences de la directive européenne 97/69/EG ou celles du paragraphe IV N° 22 de l'ordonnance allemande sur les substances nocives.

13. Élément isolant ou plus particulièrement pièce moulée selon la revendication 12, **caractérisé par** les étendues suivantes de la composition chimique des fibres minérales en % de poids.
| | | | |
|---|---|---|---|
| SiO₂ | 39 à 55 % | De préférence | 39 à 52 % |
| Al₂O₃ | 16 à 27 % | De préférence | 16 à 26 % |
| CaO | 6 à 20 % | De préférence | 8 à 18 % |
| MgO | 1 à 5 % | De préférence | 1 à 4,9 % |
| Na₂O | 0 à 15 % | De préférence | 2 à 12 % |
| K₂O | 0 à 15 % | De préférence | 2 à 12 % |
| R₂O (Na₂O + K₂O) | 10 à 14,7 % | De préférence | 10 à 13,5 % |
| P₂O₅ | 0 à 3 % | En particulier | 0 à 2 % |
| Fe₂O₃ (fer au total) | 1,5 à 15 % | En particulier | 3,2 à 8 % |
| B₂O₃ | 0 à 2 % | De préférence | 0 à 1% |
| TiO₂ | 0 à 2 % | De préférence | 0,4 à 1 % |
| Autres | 0 à 2,0 % | | |
